# EUROPEAN PATENT APPLICATION

(11) **EP 2 189 358 A1**
(43) Date of publication of application: **26.05.2010**
(21) Application number: 09176551.1
(22) Date of filing: 19.11.2009
(51) Int. Cl.: B62J 6/00, B62K 21/26

(54) **A turning signal light integrated grip**

(30) Priority: 20.11.2008 TW 97220768 U; 16.03.2009 TW 98204068 U
(71) Applicant: Lu, Yen-Ho, Taichung City 408 (TW)
(72) Inventor: Lu, Yen-Ho, Taichung City 408 (TW)
(74) Representative: Lang, Christian

(57) **Abstract**

This invention proposes a turning-light integrated grip for bikes. Its main features comprises: (1) An invisible wiring is hided inside the grip (10), and also (2) The turning signal light module is hided and protected inside a corresponding outer ring (30) so that aesthetic merits can be reached. (3) Automatic power-off electrical function makes the product more practical for uses. The whole invention helps to enhance the safety of bike riding, and aforementioned features help the product to be more practically for use and marketing.

## Description

### FIELD OF THE INVENTION

The present invention relates to the field of bike safety. The invention integrates turning signal light and grip into one product for bike industry. While reaching expected functions, it also takes care of aesthetic merits, making this invention more practical and appealing to the users.

### BACKGROUND OF THE INVENTION

A conventional old-fashioned turning light integrated grip has two modules: the grip and turning signal light modules. The signal light module is mounted on the bar end of the grip. The signal light is so activated that the rider needs to use his little finger to press the switch button on the light because the light is mounted at the bar end of the grip. Due to weak power of little finger's nature, such a product is so inconvenient and hard for riders to activate the turning light.

Taiwan Patent M306969 relates to a warning light grip. However, the major drawback is that there is no special housing space designed for housing and protecting its signal wire, thus making the signal wire easily broken when users try to install the product on their bikes.

### BRIEF SUMMARY OF THE INVENTION

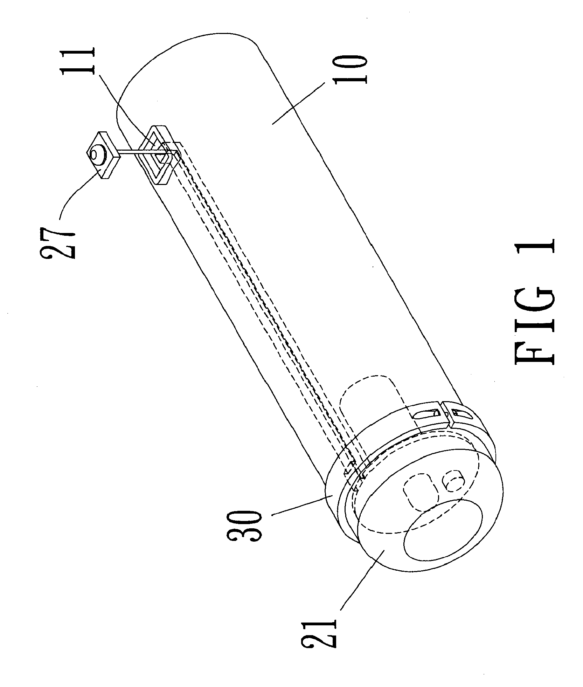

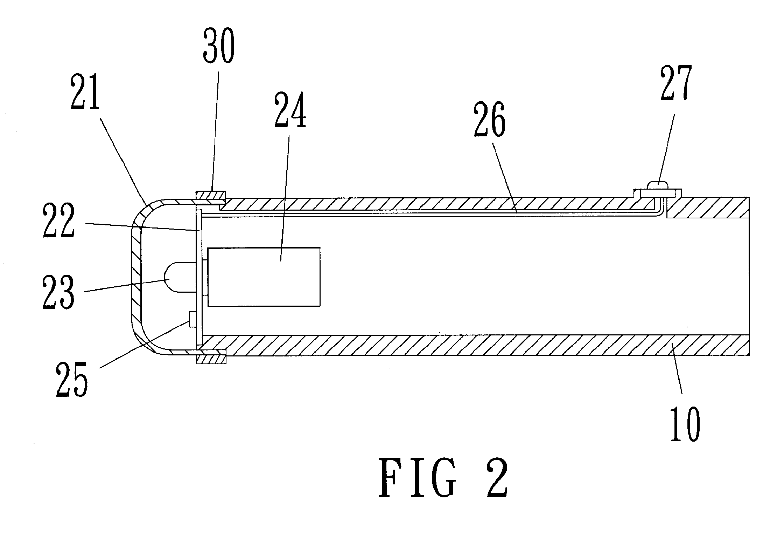

With references to Fig. 1, 2, and 3, the invention in hardware mainly comprises a grip main body that is hollow and has an elongated hole inside its body (for housing signal wire purpose). Alternatively, the said elongated hole can be an elongated recess (please see Fig.2) instead on the inner wall of the grip main body to reach the same housing purpose;

A turning signal light module that comprises light housings, an electrical system with voltage-raising circuits, LEDs, a power supply, a buzzer, signal wire, and a light-activating switch; The electrical system is equipped with an automatic power-off function that shuts off the signal light when it is being activated over a preset period of time. Due to limited space inside the handle bar and also the preference of lighter weight in bike industry, the power supply is designed to carry only one battery (lower than 2.0V in voltage), making the need of the said voltage-raising circuits; and

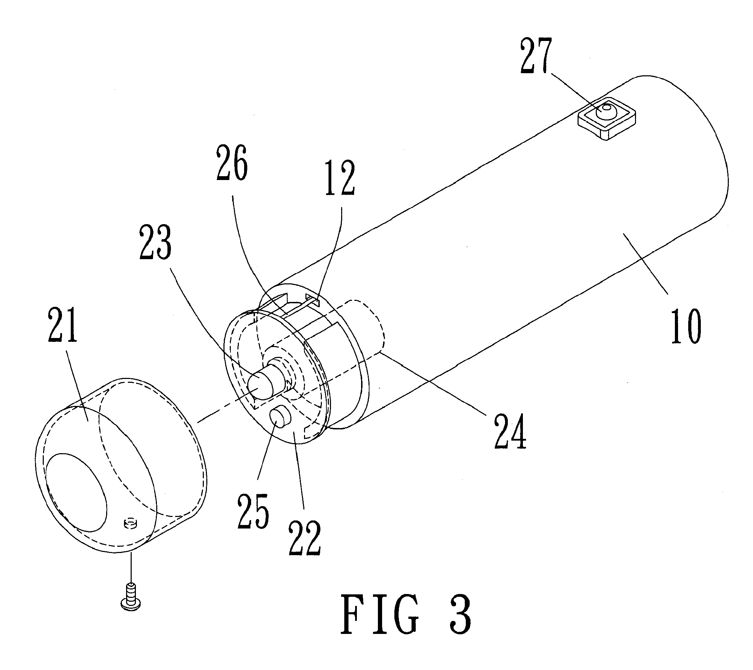

A protective outer ring that has a mounting bolt for the purpose of mounting the entire product onto the handle bar; Another feature of the protective outer ring, moreover, is that the appearance of protective outer ring can be plated with a preferred color, so it also poses well for aesthetic merits. Alternatively, the protective outer ring can be omitted by applying a fixing screw to fix the light housings with grip main body directly (please see Fig.3).

When a rider uses his/her thumb to press the switch, the signal is then sent through the signal wire to the said electrical system to activate to flash the turning signal light and the buzzer (the buzzer is used so that rider can tell the activation states of the light without looking at the light). Although the power supply is low, the voltage-raising circuits help boosting up the voltage to a proper level for LED's functioning. When the light is being activated over a preset period of time, the automatic power-off function activates to shut off the light automatically, leaving riders worry-free for forgetting switching off power.

### BRIEF DESCRIPTION OF THE DRAWINGS

Figure 1: A perspective view of the invention;
Figure 2: A sectional view of the invention when adopting an elongated recess as an alternative;
Figure 3: An alternative design without a protective outer ring for the invention;
Figure 4: A perspective view of the preferred embodiment
Figure 5: A view of a horn-shaped piece

### DETAILED DESCRIPTION OF THE INVENTION

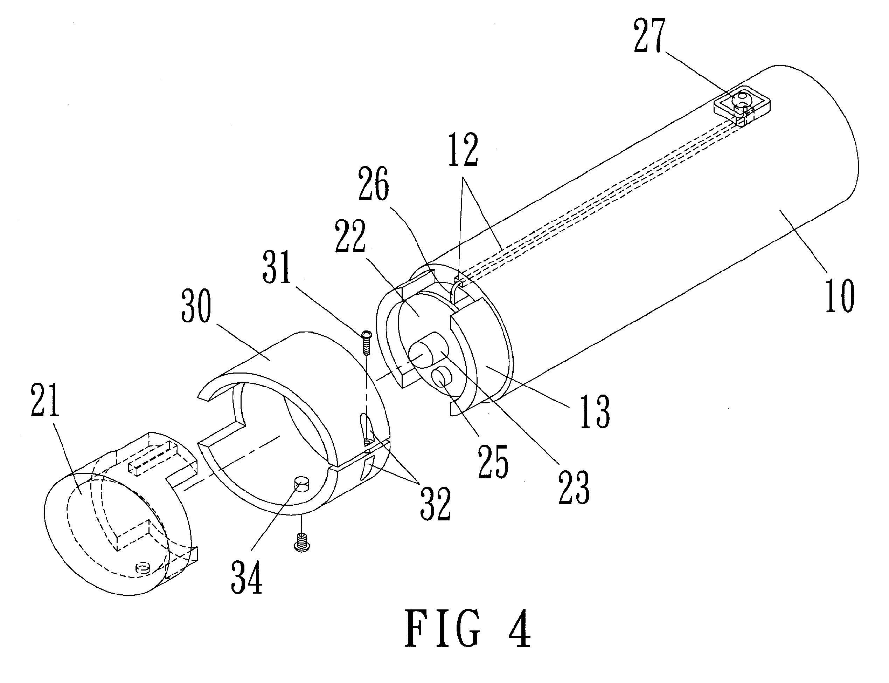

In order to understand better the present invention, please refer to following descriptions and explanations for a preferred embodiment with reference to the attached Fig. 1 to 5. The preferred embodiment of the invention of comprises:

A grip main body 10 that is hollow and has an opening hole 11 near its one end that houses a light-activating switch 27, an elongated hole 12 inside its body for housing signal wire 26, and multiple pieces of mounting fins 13 at its end for mounting purpose;

A turning signal light module that comprises light housings 21, an electrical system 22 with voltage-raising circuits, LEDs 23, a power supply 24 that is electrically connected to the said electrical system 22, a buzzer 25, signal wire 26, and a light-activating switch 27; the said electrical system 22 contains a simple micro controller (not shown in the figures) that carries an automatic power-off function that can shut off the signal light when it is being activated over a preset period of time; the power supply 24 carries a battery;

A protective outer ring 30 that is C-shaped in side view and has a mounting bolt 31 and two mounting holes 32 on its both sides of the C-opening to cooperate with the mounting bolt 31 for the purpose of mounting the entire product onto the handle bar of a bike. Moreover, there is at least one recess window 33 at its front end for the beam to shoot out towards its front direction. Furthermore, there is a fixing hole 34 on the outer ring 30 (at a proper location) for fixing the outer ring 30 with the turning light housing 21 by a screw;

And further for better lighting effects, the protective outer ring 30 and the light housings 21 are slanted designed at the lighting side. When assembled, the outer ring 30 is fitted onto the mounting fins 13 around its outer faces. Then the mounting bolt 31 is tightened against the mounting holes 32 so further to press the mounting fins 13 tightly, thus making the entire product mounted firmly on the handle bar.

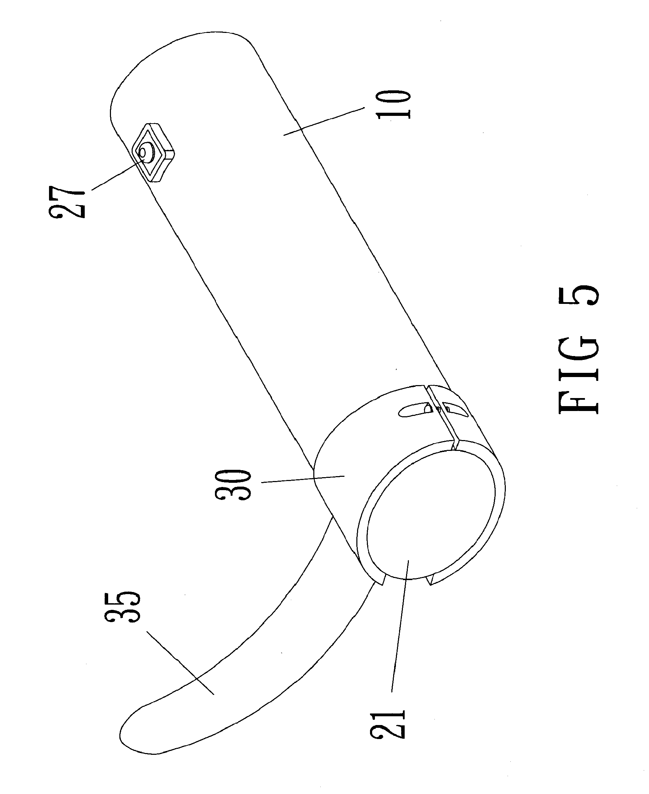

Alternatively, with all features mentioned above, the protective outer ring 30 can further extend to a horn-shaped piece 35 (please see Fig.5) for adding extra handholding position.

Such an invention provides riders with extra security and conveniences that prior arts do not have. With all aforementioned, the invention deserves grant of a patent based on its capability of industrial application and absolute novelty. The example illustrated above is just an exemplary embodiment for the invention, and shall not be utilized to confine the scope of the patent. Any equivalent modifications within the scope of claims of the patent shall be covered in the protection for this patent.

While certain preferred embodiments have been described and shown in the accompanying drawings, it is to be understood that such embodiments are merely illustrative of, and not restrictive on, the broad invention. Other embodiments that are apparent to those of ordinary skill in the art, including embodiments that do not provide all of the features and advantages set forth herein, are also within the scope of this invention.

Further, it is to be understood that this invention is not limited to the specific construction and arrangements shown and described since various modifications or changes may occur to those with ordinary skill in the art without departing from the spirit and scope of the invention. Accordingly, the scope of the invention is defined by the claims that follow. In the claims, a portion shall include greater than none and up to the whole of a thing.

## Claims

1. A turning signal light integrated grip comprising:
a grip main body that has an elongated hole inside its body; and
a turning signal light module that comprises light housings, an electrical system, LEDs, a power supply, and a light-activating switch.

2. The turning signal light integrated grip of claim 1, wherein said electrical system comprises voltage-raising circuits.

3. The turning signal light integrated grip of claim 1, wherein said turning signal light module comprises a buzzer for making sounds.

4. The turning signal light integrated grip of claim 1, wherein said electrical system comprises an automatic power-off function that shuts off the signal light when it is being activated over a preset period of time.

5. The turning signal light integrated grip of claim 1, further comprising a protective outer ring.

6. A turning signal light integrated grip comprising:
a grip main body that has an elongated recess on its inner wall; and
a turning signal light module that comprises light housings, an electrical system, LEDs, a power supply, and a light-activating switch.

7. The turning signal light integrated grip of claim 6, wherein said electrical system comprises voltage-raising circuits.

8. The turning signal light integrated grip of claim 6, wherein said turning signal light module comprises a buzzer for making sounds.

9. The turning signal light integrated grip of claim 6, further comprising a protective outer ring.

10. The turning signal light integrated grip of claim 6, wherein said electrical system comprises an automatic power-off function that shuts off the signal light when it is being activated over a preset period of time.

11. A turning signal light integrated grip comprising a protective outer ring that has at least one recess window for the beam to shoot out.

12. The turning signal light integrated grip of claim 11, wherein said protective outer ring comprises a horn-shaped piece for extra handholding position.

13. The turning signal light integrated grip of claim 11, wherein said protective outer ring has a mounting bolt and two mounting holes for mounting purpose.

14. A turning signal light integrated grip comprising a protective outer ring having a fixing hole used for fixing with the light housings.

15. The turning signal light integrated grip of claim 11 or 14, wherein said protective outer ring is slanted designed.
